# FASCICULE DE BREVET EUROPEEN

(11) **EP 1 720 649 B1**
(45) Date de publication et mention de la délivrance du brevet: **31.05.2017**
(21) Numéro de dépôt: 05734169.5
(22) Date de dépôt: 03.03.2005
(51) Int. Cl.: B01J 13/12, B01J 13/04

(54) **PROCÉDÉ DE PRÉPARATION DE MICROSPHÈRES BIODÉGRADABLES CALIBRÉES**
VERFAHREN ZUR HERSTELLUNG VON KALIBRIERTEN BIOLOGISCH ABBAUBAREN MIKROKUGELN
METHOD FOR PREPARING CALIBRATED BIODEGRADABLE MICROSPHERES

(30) Priorité: 03.03.2004 FR 0402204
(43) Date de publication de la demande: 15.11.2006
(73) Titulaire: ETHYPHARM, 92213 Saint-Cloud Cedex (FR)
(72) Inventeur: ROYERE, Audrey, 33600 Pessac (FR); BAZILE, Didier, 45000 Orleans (FR); BIBETTE, Jérôme, F-75005 PARIS (FR)
(74) Mandataire: Lavoix
(86) Numéro de dépôt international: PCT/FR2005/000511
(87) Numéro de publication internationale: WO 2005/087362

(56) Documents cités:
- WO-A-97/22409
- WO-A-03/106809
- US-A- 5 460 817
- US-A- 5 558 820

## Description

L'invention concerne l'industrie pharmaceutique. Plus précisément, elle concerne la préparation de microsphères biodégradables monodisperses, notamment pour l'administration de principes actifs pharmaceutiques.

Il est connu d'encapsuler des principes actifs pharmaceutiques dans des microsphères pour faciliter leur administration ou éviter leur dégradation *in vivo*.

La microencapsulation consiste à enrober des substances solides ou liquides de manière à en faire des particules, dont la taille varie de 0,1 à 1000 µm.

Dans ce cadre, on a notamment envisagé l'utilisation de microsphères biodégradables, lesquelles délivrent le principe actif sur une période prolongée.

On connaît différentes techniques de préparation de microsphères biodégradables.

Ainsi, on connaît du brevet US 5,643,607 des microcapsules pour l'administration prolongée de principes actifs hydrophiles, en particulier de peptides. Les microcapsules sont préparées par microencapsulation d'une émulsion dont la phase aqueuse dispersée contient le principe actif et la phase continue contient un polymère. Le document WO 03/106809 décrit des microsphères comportant un agent chimique en solution aqueuse encapsulé dans une phase polymérique dégradable destinées à être injecté dans des trous de forage pétroliens.

Le document WO97/22409 décrit un procédé de préparation de microsphères creuses à paroi en polymère biodégradable remplies de gaz injectables, utiles comme agent de contraste en imagerie. Cependant, on constate que la cinétique de libération de l'actif contenu dans ces microsphères est inhomogène. Cet effet est dû au fait que les microsphères présentent une distribution granulométrique large. Or la libération du principe actif à partir des microsphères repose sur des effets de diffusion et est donc généralement ralentie pour des microsphères de taille croissante, se prolongeant sur de plus longues périodes.

Un procédé de préparation de microsphères monodisperses consiste à passer une solution de polymère à travers une buse soumise à une vibration, chacune des vibrations entraînant la rupture du flux sortant de la buse pour former une gouttelette (Berkland et al. J. Controlled Release 73 (2001), 59-74). Ce procédé est complexe et long et présente un faible rendement. En outre, il paraît difficile à transposer à l'échelle industrielle. Par ailleurs, il ne permet pas toujours d'assurer une répartition homogène du principe actif au sein des microcapsules, dans la mesure où il repose sur un phénomène de précipitation instantanée.

Aussi, la présente invention a pour but de proposer un procédé de préparation de microcapsules biodégradables monodisperses et de taille contrôlée, notamment destinées au transport de principes actifs aussi bien hydrosolubles que liposolubles.

On connaît du brevet FR 2 747 321 une méthode de préparation d'émulsions monodisperses par cisaillement laminaire contrôlé dans un dispositif de type Couette. Toutefois, ce procédé ne vise que des émulsions de lipides et non pas des systèmes complexes dans lesquels la phase organique comprend un polymère et un solvant organique.

L'invention repose principalement sur la constatation que l'obtention d'une émulsion contenant au moins une phase organique polymérique est possible lorsque le rapport des viscosités entre la phase dispersée et la phase continue (η_{org}/η_{aq} dans le cas d'une émulsion directe ou η_{aq}/η_{org} dans le cas d'une émulsion inverse) est compris entre 0,1 et 10.

Ainsi, l'invention vise plus précisément un procédé de préparation de microsphères biodégradables monodisperses comprenant les étapes de :
a) préparation d'une émulsion simple directe comportant au moins une phase polymérique, laquelle comprend un principe actif pharmaceutique et au moins une phase aqueuse, le rapport des viscosités entre la phase dispersée et la phase continue doit être comprise entre 0,1 et 10 ;
b) soumission de l'émulsion obtenue à un cisaillement laminaire contrôlé en mettant l'émulsion en contact avec une surface solide en mouvement, le gradient de la vitesse caractérisant l'écoulement de l'émulsion étant constant dans une direction perpendiculaire à la surface solide en mouvement;
c) élimination du solvant de la phase polymérique ; et
d) isolement des microsphères ainsi obtenues.

Dans la présente invention, on désigne par le terme « microsphères » des unités sphériques de diamètre compris entre 0,1 µm et 1000 µm, plus particulièrement entre 0,7 µm et 30 µm.

Les microsphères selon la divulgation sont constituées d'une matrice à base de polymère. Elles se prêtent ainsi particulièrement bien à l'administration de principes actifs sensibles à la chaleur, par exemple les protéines ou les polypeptides. En effet, alors que la phase lipidique est transformée en liquide par le biais de chauffage, la mise en forme des microsphères polymériques repose sur la mise en solution du polymère dans un solvant organique. Après élimination du solvant, les composants polymériques des microsphères forment une matrice uniforme dans laquelle peut être encapsulé un principe actif. Les microsphères polymériques peuvent donc être fabriquées sans élévation de la température.

Selon la solubilité du principe actif, celui-ci peut être encapsulé directement dans la phase polymérique, soit au sein de microgouttelettes de phase aqueuse contenues dans la matrice polymérique des microsphères. Généralement, il sera encapsulé dans la matrice polymérique lorsque le principe actif est liposoluble. Au contraire, il est encapsulé en phase aqueuse interne lorsque le principe actif est hydrosoluble. Certains principes actifs présentent une faible solubilité à la fois dans l'eau et dans les solvants apolaires. Dans ce cas, on peut disperser le principe actif à l'état solide dans la solution de polymère.

L'administration des principes actifs ni liposolubles ni hydrosolubles est particulièrement délicate par le biais des formes galéniques connues. Les microsphères selon la divulgation paraissent donc particulièrement intéressantes pour l'administration de ces principes actifs.

On entend par « biodégradable » dans la présente demande un matériau qui se dégrade dans un milieu biologique et dont les produits de dégradation sont éliminés par filtration rénale ou métabolisés. Les polymères biodégradables sont définis comme des polymères synthétiques ou naturels, dégradables *in vivo* de manière enzymatique ou non enzymatique, pour produire des produits de dégradation non toxiques.

Cette dégradation a généralement lieu en un temps allant de quelques semaines à quelques mois (exemple : le PGA-TMC est absorbé en 7 mois alors que le L-PLA a une durée de dégradation d'environ 2 ans).

Le temps de dégradation d'un polymère dépend de son type, donc de la nature chimique des unités monomères, mais aussi de son degré de polymérisation, de sa cristallinité. Par ailleurs, outre le matériau, il dépendra notamment de la surface de matériau accessible aux enzymes ou autres substances dégradantes. Ainsi, le matériau sera dégradé d'autant plus rapidement qu'il est finement divisé.

Les microsphères sont dégradées de sorte que la quantité de polymère accumulée dans l'organisme ne dépasse pas une quantité équivalente à 20 fois la dose de polymère administrée par administration. De préférence, la quantité de polymère accumulée dans l'organisme ne dépasse pas une quantité équivalente à 10 fois la dose de polymère administrée par administration

L'intervalle séparant deux administrations successives de microsphères selon l'invention est généralement au moins un jour, de préférence entre 1 jour et 30 jours, et en particulier entre 5 et 14 jours.

Ainsi, on assure que les microsphères ne s'accumulent dans le corps.

Les microsphères selon la divulgation comprennent une matrice polymérique dans laquelle peuvent être répartis un ou plusieurs principes actifs ou des gouttelettes de solution aqueuse pouvant elles-mêmes contenir un ou plusieurs principes actifs.

Le ou les principes actifs peuvent être, indépendamment les uns des autres, hydrosolubles ou peu hydrosolubles, liposolubles ou peu liposolubles ou encore à la fois peu liposolubles et peu hydrosolubles.

En effet, il est possible, dans le cas de compositions dont la phase dispersée comporte une phase aqueuse interne, de véhiculer par exemple, seul ou en association avec les principes actifs peu hydrosolubles, des principes actifs hydrophiles.

Le principe actif est un principe actif pharmaceutique.

De préférence, le principe actif pharmaceutique est choisi parmi les groupes constitués par les antibiotiques, hypolipidémiants, antihypertenseurs, agents antiviraux, betabloqueurs, bronchodilatateurs, cytostatiques, agents psychotropes, hormones, vasodilatateurs, anti-allergiques, antalgiques, antipyrétiques, antispasmodiques, anti-inflammatoires, anti-angiogéniques, antibactériens, anti-ulcéreux, antifongiques, anti-parasitaires, antidiabétiques, antiépileptiques, antiparkinsoniens, antimigraineux, anti-Alzheimer, antiacnéiques, antiglaucomateux, antiasthmatiques, neuroleptiques, antidépresseurs, anxiolytiques, hypnotiques, normothymiques, sédatifs, psychostimulants, anti-ostéoporoses anti-arthritiques, anticoagulants, antipsoriasis, hyperglycémiants, orexigènes, anorexigènes, antiasthéniques, anti-constipation, anti-diarrhéiques, anti-traumatiques, diurétiques, myorelaxants, médicaments de l'énurésie, médicaments des troubles de l'érection, vitamines, peptides, protéines, anticancéreux, acides nucléiques, ARN, oligonucléotides, ribozymes et l'ADN.

Par ailleurs, il peut se révéler avantageux d'associer le ou les principes actifs à un agent modulant l'absorption par voie orale ou à un inhibiteur enzymatique, par exemple un inhibiteur de la P-glycoprotéine ou un inhibiteur de protéase.

On entend par le terme « monodisperse » désigner une population de microsphères dont le diamètre de chaque microsphère est très proche du diamètre moyen de la population. Une population est dite « monodisperse » lorsque la polydispersité est inférieure ou égale à 40%, et de préférence de l'ordre de 5 à 30%, par exemple entre 15 et 25%. La polydispersité est alors définie comme étant le rapport de l'écart-type à la médiane de la distribution du diamètre des gouttelettes ou globules représenté en volume.

Les microsphères monodisperses selon la présente divulgation sont obtenues en soumettant une émulsion comprenant à titre de phase dispersée des gouttelettes de phase polymère (contenant ou non des gouttelettes d'eau interne) comprenant un ou plusieurs principes actifs à un cisaillement contrôlé. En outre, un cisaillement paramétrable et contrôlable permet de contrôler la taille des microsphères et par ce biais la libération du principe actif et son élimination de l'organisme.

De préférence, on met en oeuvre cette étape dans un appareil de type Couette. On obtient ainsi des microsphères dont la distribution de taille est resserrée et homogène.

Le procédé de préparation des microsphères conforme à l'invention présente l'avantage d'être un procédé simple et de n'utiliser qu'une quantité faible de solvant. Il peut être transposé aisément à une échelle industrielle.

De plus, ce procédé présente un fort rendement d'encapsulation de principe actif dans les microsphères. On entend par rendement d'encapsulation le rapport entre le principe actif encapsulé et le principe actif mis en oeuvre. Celui-ci peut être optimisé dans le procédé par un coefficient de partage entre la phase aqueuse et la phase organique favorable à la solubilisation du principe actif dans la phase organique et une concentration élevée de l'émulsion en phase organique. Plus précisément, le procédé consiste à préparer, dans une première étape, une émulsion comportant au moins une phase organique et au moins une phase aqueuse.

Dans le cas où il y a une phase organique et une phase aqueuse, on prépare une émulsion simple directe.

On entend par le terme « émulsion directe » une émulsion dans laquelle une phase organique est dispersée dans une phase aqueuse. En opposition, dans une émulsion « inverse », une phase aqueuse est dispersée dans une phase organique.

L'émulsion directe est notamment utile pour encapsuler un principe actif liposoluble (solubilisé dans la phase organique).

La réalisation de microsphères à partir d'émulsions doubles est toutefois également possible. Ces émulsions comportent deux phase aqueuses : une phase aqueuse dite « interne », laquelle est dispersée dans la phase organique, elle-même dispersée dans la phase aqueuse dite « externe ». La phase aqueuse interne permet alors la dissolution de principes actifs hydrophiles et en particulier de principes actifs fragiles tels que des protéines ou des polypeptides par exemple.

Ainsi, suivant que l'on veut encapsuler des principes actifs lipophiles ou hydrophiles, on utilisera soit une émulsion simple directe, soit une émulsion double E/Org/E. L'émulsion double est également un moyen d'obtenir des microsphères encapsulant plusieurs principes actifs, par exemple une combinaison d'un principe actif hydrophile (solubilisé dans la phase aqueuse interne) avec un principe actif hydrophobe (solubilisé dans la solution organique contenant le polymère).

La phase organique de l'émulsion contient au moins un polymère biodégradable dissout dans un solvant organique.

La phase organique des émulsions contient avantageusement entre 5 et 30 % d'au moins un polymère biodégradable et préférentiellement entre 10 et 20 % en masse de la masse totale de phase organique.

Le polymère est choisi parmi les polymères biodégradables non toxiques pour l'homme ou l'animal. Il sera en outre avantageusement inerte par rapport au principe actif et insoluble dans l'eau.

Le ou les polymères biodégradables utilisés sont préférentiellement des polymères approuvés pour un usage dans la voie d'administration considérée (par exemple parentérale). D'une manière préférée, on utilisera comme polymères biodégradables des polymères dont les produits de dégradation peuvent être éliminés facilement par l'organisme.

Parmi ces polymères, on peut citer notamment ceux dérivés de l'acide lactique, et en particulier de la famille des α-hydroxy acides tels que le PLGA (acide poly-lactique et glycolique). Ces polymères sont approuvés pour un usage parentéral chez l'homme. Ils présentent par ailleurs une cinétique de dégradation dans l'organisme adaptée en terme de libération du principe actif Le degré de cristallinité du polymère va directement influencer son caractère hydrophile ainsi que la rapidité de sa dégradation *in vivo*.

Ces polymères sont dégradés dans l'organisme par un mécanisme chimique d'hydrolyse non spécifique ou par une dégradation enzymatique. Les monomères qui en résultent sont métabolisés et conduisent à des produits de dégradation éliminés majoritairement par voie respiratoire sous forme de dioxyde de carbone et d'eau.

Ainsi, on pourra utiliser pour la réalisation de la présente invention des polymères choisis parmi les poly(α-hydroxy-acides), les polyesters aliphatiques des poly(α-hydroxy-acides), des poly(ε-caprolactones)-PCL, des polydioxanones - PDO, les polyorthoesters, les polyanhydrides, les polycyano-acrylates, les polyuréthannes, les polypeptides ou poly(amino-acides), les polysaccharides modifiés, la cellulose, les polycarbonates, les polydiméthylsiloxanes et les poly(vinyl-acétates) ainsi que leurs dérivés et copolymères.

Les polymères de la classe des poly(α-hydroxy-acides) sont des polyesters dont les unités de répétition dérivent des α-hydroxy-acides, tels que les poly(glycolide) (PGA), les poly(lactide) (PLA), les poly(lactide-co-glycolide) (PLAGA ou PLGA), les copolymères glycolide-co-triméthylène carbonate ou polyglyconates (PGA-TMC). Ils sont disponibles dans le commerce (par exemple sous les dénominations Resomer®, Medisorb®).

D'autres polymères peuvent être envisagés tels que les terpolymères issus de la polymérisation du glycolide avec du triméthylène carbonate et de la p-dioxanone, ou les copolymères blocs tels que les polyéthylène glycol - poly(α-hydroxy-acides) (PLA-PEG, PLGA-PEG) ou les méthoxy-polyéthylène glycol - poly(α-hydroxy-acides).

De même que pour les α-hydroxy acides, le degré de cristallinité du polymère va directement influencer son caractère hydrophile ainsi que la rapidité de sa dégradation *in vivo*.

La ε -caprolactone est un ester de l'acide hydroxy-6-caproïque. La poly(ε -caprolactone) et ses copolymères obtenus avec l'acide lactique sont des polymères semi-cristallins utilisés dans la composition de formes médicamenteuses à libération contrôlée. Ces polymères sont dégradés dans l'organisme de manière similaire à celle des PLA et PLGA (dégradation non enzymatique). Un tel polymère est commercialisé sous le nom de Lactel®

Les polydioxanones - PDO sont des polyether-esters obtenus par ouverture du cycle de la p-dioxanone.

Certains principes actifs sont instables, notamment ceux qui sont sujets à une hydrolyse rapide. Il sera donc contre-indiqué d'utiliser des polymères qui retiennent l'eau. Dans ce cas, des polymères plus hydrophobes et qui se dégradent par érosion de surface sont à privilégier, tels que les polyorthoesters et les polyanhydrides.

Les polyorthoesters sont des composés issus de la condensation de 2,2-diéthoxytétrahydrofurane avec un diol. Ces polymères ont pour produits de dégradation des composés acides qui catalysent le processus de dégradation. La dégradation s'accélère donc au cours du temps. Ils sont commercialisés sous le nom de Chronomer® et Alzamer®, par exemple.

Les polyanhydrides sont des composés dérivés de l'acide sébacique p(SA) et du bis p(carboxyphénoxy)propane p(CPP). L'acide sébacique peut aussi être associé à un dimère d'acide gras (acide oléique : p(FAD-SA). Leur temps de dégradation peut varier de quelques jours à quelques années selon le degré d'hydrophobicité du monomère utilisé. Ils sont dégradés grâce à une érosion de surface et possèdent une excellente biocompatibilité.

Parmi les polycyanoacrylates sont préférés les polycyanoacrylates à longue chaîne alkyle, lesquels se dégradent lentement et engendrent peu de réaction inflammatoire des tissus. De tels polymères sont disponibles sous le nom de Desmolac® (BAYER).

Les polypeptides ou poly(amino acides) sont des polyamides résultant de la condensation de molécules présentes naturellement dans l'organisme. Afin d'obtenir un matériau qui s'hydrolyse graduellement au cours du temps, les polymères issus d'acides aminés simples (hydrophiles) et de dérivés hydrophobes d'acides aminés, tels que les esters méthylique ou benzylique de l'acide aspartique sont préférés.

Le mécanisme supposé de dégradation est tout d'abord une hydrolyse des fonctions esters (ponts di-sulfures) donnant des macromolécules hydrosolubles, puis un processus de diffusion vers le foie et les reins dans lesquels les liaisons peptidiques sont rompues par attaque enzymatique. A titre d'exemple de cette classe de polymère, on peut citer l'Ultramid A4 Naturel (BASF).

Parmi les dérivés de cellulose, on peut mentionner plus particulièrement la méthylcellulose et l'éthylcellulose, commercialisées par exemple sous le nom de Blanose®, Ethocel® (Dow Cemica), Pharmacoat®603 ou 606 (ShinEtsu Chemical), Aqualon EC® (Aqualon company).

A titre de polycarbonate, on peut citer le poly(triméthylène carbonate) (Poly(TMC)) et le poly(propylène carbonate), disponible sous le nom d'Araconate 5 000.

Parmi les poly(vinylacétates), on préfère particulièrement le copolymère d'éthylène et d'acétate de vinyle (EVA), disponible par exemple sous le nom de Coathylene® (plast-Labor SA).

De préférence, les polymères présents dans la phase organique présentent une masse moléculaire moyenne comprise entre 50 et 500 kDaltons, et en particulier entre 100 et 200 kDaltons.

De manière tout à fait préférée, les microsphères sont préparées à partir de la famille des PLGA. Dans la famille de ces polymères se sont révélés particulièrement convenables le PLGA 75/25 (lactique/glycolique) ou 85/15 vendus sous la dénomination "High IV", ayant un poids moléculaire compris entre 110 et 160 kDaltons.

Ces polymères présentent des propriétés d'hydrophobicité différentes, en fonction de la proportion d'unités d'acides lactiques. Ainsi, plus la concentration en acide lactique augmente, plus le PLGA sera hydrophobe.

D'autre part, la cinétique de dégradation du polymère est d'autant plus longue que la proportion d'acide lactique est élevée. Cette caractéristique du polymère influera sur la cinétique de libération du principe actif encapsulé. Ces caractéristiques différentes d'un PLGA à l'autre permettent donc d'envisager l'utilisation de l'un ou l'autre, voire d'un mélange de ces copolymères, en fonction des caractéristiques de libération souhaitées.

Par ailleurs, les copolymères PLGA sont solubles dans plusieurs solvants organiques comme le chloroforme, le dichlorométhane ou l'acétate d'éthyle alors qu'ils sont pratiquement insolubles dans l'eau.

Enfin, ce type de polymère est dégradé par hydrolyse et les produits de la réaction sont métabolisés en CO₂ et H₂O, éliminés lors de la respiration.

Le solvant organique utilisé pour la préparation des microsphères est de préférence approuvé pour un usage parentéral chez l'homme. Il est par ailleurs choisi pour permettre une bonne dissolution de ces polymères, de préférence à température ambiante.

Le solvant organique présente, par ailleurs, de préférence une certaine solubilité dans l'eau. En effet, un des modes de réalisation de l'élimination du solvant ultérieure consiste à extraire le solvant par diffusion dans un grand volume d'eau. Il est également possible d'éliminer le solvant par évaporation. De tels solvants incluent par exemple l'acétate d'éthyle et le dichlorométhane.

L'acétate d'éthyle est un solvant incolore et volatil modérément soluble dans l'eau (8,7g/100g d'eau à 20°C) dont la solubilité dans l'eau diminue lorsque la température augmente. Il est par ailleurs bien toléré par l'organisme et ne pose pas de problème particulier en terme d'environnement.

Avantageusement, la phase organique de l'émulsion est saturée en eau et inversement la (ou les) phase(s) aqueuse(s) est (sont) saturée(s) en solvant organique, afin de limiter les fuites d'eau de la phase aqueuse vers la phase organique et inversement.

La phase organique peut en outre avantageusement contenir un principe actif lipophile ou peu liposoluble et peu hydrosoluble.

La phase aqueuse de l'émulsion directe ainsi que la phase aqueuse dite « externe » de l'émulsion double contient outre de l'eau de préférence d'autres agents. De préférence, ces agents sont approuvés pour usage parentéral. Ainsi, on ajoute de préférence des agent stabilisants, généralement des agents tensioactifs afin d'augmenter la stabilité de l'émulsion.

On pourra avantageusement utiliser des tensioactifs non ioniques comme le PVA (alcool polyvinylique) ou des tensioactifs non ioniques comme le polysorbate monooléate (tween 80 ou Montanox 80). De préférence, le PVA mis en oeuvre a un poids moléculaire compris entre 30 et 200 kDaltons.

Ce tensioactif non ionique est par exemple hydrolysé à 88 %. Il est par ailleurs particulièrement avantageux dans la mesure où il augmente la viscosité de la phase aqueuse dite « externe ».

Dans le cas d'une émulsion double, la phase aqueuse externe comporte avantageusement également au moins un agent d'osmolarité afin d'équilibrer la pression osmotique avec la phase aqueuse interne. On évite ainsi les fuites du principe actif vers le milieu extérieur.

Un agent d'osmolarité habituellement utilisé est le glucose ou tout autre sucre comme le mannitol, le tréhalose, mais des sels comme le chlorure de sodium par exemple peuvent également convenir.

L'agent d'osmolarité est présent dans la phase aqueuse externe en principe en quantité suffisante pour atteindre la concentration ionique présente dans la phase aqueuse interne. Généralement, la concentration en agent d'osmolarité est alors de 0,1 à 20 % en poids par rapport au poids de la phase aqueuse. Préférentiellement, on utilisera ce sel dans la phase aqueuse interne à une concentration de 0,6% (m/m) qui est la concentration la plus adaptée aux préparations injectables. Préférentiellement, on utilisera du glucose dans la phase aqueuse externe à une concentration de 11,5% (m/m) qui est la quantité nécessaire pour égaler la concentration ionique présente dans la phase aqueuse interne.

Enfin, la phase aqueuse de l'émulsion contient avantageusement au moins un agent de viscosité permettant d'ajuster la viscosité de la phase afin qu'elle soit acceptable pour la mise en oeuvre de la seconde étape décrite ci-dessous. Ces agents contribuent également à stabiliser les émulsions doubles en limitant la coalescence des gouttes en suspension.

Elle contient généralement 10 à 80 %, de préférence 30 à 70%, préférentiellement entre 40 et 60 % en poids d'agents de viscosité par rapport au poids total de l'émulsion.

De manière générale, on pourra choisir l'agent de viscosité parmi les polymères hydrophiles tels que les éthers et esters de glycol, les poloxamers comme les Lutrol®, les poly(aminosaccharides) comme les Chitines ou Chitosans, les poly(saccharides) comme le Dextran et les dérivés de la cellulose comme les Carbopol®.

De préférence, l'agent de viscosité est un poloxamer : polymère séquencé de polyéthylène-polypropylène. Le noyau central hydrophobe est constitué par le polypropylène et entouré par des séquences hydrophiles de polyéthylène. De préférence on utilisera le poloxamer 188 (Lutrol® F68, BASF) qui forme des gels à des concentrations comprises entre 50 et 60% dans l'eau.

La quantité d'agent à mettre en oeuvre est fonction de la viscosité à atteindre. D'une manière préférée, la concentration en poloxamer est toutefois inférieure à 50 % en masse de manière à éviter la formation d'un gel.

La combinaison des agents stabilisants avec les agents de viscosité revêt une importance toute particulière dans la mesure où on a montré que le succès de l'étape de cisaillement laminaire dépendait pour une grande part du rapport des viscosités entre la phase dispersée et la phase continue. La combinaison de ces agents permet alors à la fois l'obtention aisée du rapport de viscosité optimal entre les phases ainsi qu'une stabilité de l'émulsion vis-à-vis de la coalescence des gouttes.

La phase aqueuse de l'émulsion peut comprendre tout autre agent ou additif habituellement présent dans les formulations pharmaceutiques, tels que des conservateurs, agents tampons.

En particulier, la phase aqueuse interne peut comprendre également au moins un autre principe actif, en particulier hydrosoluble.

Ainsi, on peut combiner un principe actif hydrophile et lipophile en solubilisant le premier dans la phase aqueuse interne et le second dans la phase organique de polymère.

Enfin, la ou les phases aqueuses de l'émulsion sont de préférence saturées en solvant organique pour éviter une diffusion de celui-ci depuis la phase organique vers ces phases.

Comme décrit ci-dessus, les microsphères peuvent être préparées à partir d'une émulsion double, dans laquelle une deuxième phase aqueuse (dite « interne ») est dispersée dans la phase organique polymère.

La phase aqueuse interne de l'émulsion double peut contenir les agents déjà mentionnés ci-dessus au sujet de la phase aqueuse externe.

La phase aqueuse interne des émulsions doubles peut toutefois également contenir au moins une protéine, à titre d'agent tensioactif, et/ou d'agent de viscosité et/ou à titre de principe actif.

Ainsi, elle peut contenir une protéine de haut poids moléculaire telle que la SAH (Serum Albumine Humaine) afin d'augmenter la viscosité et/ou pour stabiliser l'émulsion. En effet, on a remarqué que le caractère amphiphile de telles macromolécules pouvait contribuer à stabiliser l'émulsion. D'une manière préférée, la phase aqueuse interne comprend la SAH ou au moins une protéine à des concentrations comprises entre 0,01 % et 10 % en poids par rapport au poids de la phase aqueuse interne, de préférence entre 0,1 et 2%

Lorsque la phase aqueuse interne comprend une protéine, il est alors généralement préférable d'ajouter d'autres additifs afin de constituer un milieu adapté à la protéine d'intérêt, en particulier pour ce qui concerne le pH. La présence d'un agent tampon d'un pH proche du pHi de la protéine permet avantageusement la conservation de la conformation naturelle de la protéine.

La phase aqueuse interne des émulsions doubles peut donc en outre contenir les composés nécessaires pour former un tampon stabilisant le pH de la solution. Les valeurs de pH adaptées pour les différentes protéines et les tampons correspondants sont connus par l'homme du métier et ne seront donc pas détaillés ici.

La phase aqueuse interne peut également contenir des agents stabilisants tels que le poloxamer 188 décrit par SANCHEZ, A. et al. (Biodegradable micro- and nanoparticles as long-term delivery vehicles for interferon alpha. Eur. J. Pharm. Sci. (2003) 18, 221-229).

La phase aqueuse interne contient avantageusement également un co-tensioactif. Celui-ci, combiné à la protéine, va se concentrer à l'interface phase aqueuse interne/phase organique et contribuer à diminuer la tension de surface entre ces deux milieux.

Le co-tensioactif utilisé sera de préférence le Solutol HS 15 de chez BASF. Ce produit est un mélange de mono- et diesters d'acide 12-hydroxystéarique de polyéthylène glycol 660. Il est soluble dans l'eau, l'éthanol et le 2-propanol.

La phase aqueuse interne comprend un tensioactif à une concentration de 0,01 à 10%, de préférence 0,05 à 1, et tout particulièrement de 0,1 à 0,2 % en poids par rapport au poids de la phase aqueuse interne.

La phase aqueuse interne des microsphères peut en outre avantageusement contenir un principe actif.

Cela se révèle particulièrement intéressant pour l'administration de principes actifs hydrophiles fragiles tels que des protéines ou des polypeptides par exemple. En effet, on observe souvent une altération de l'activité biologique de ces composés lors d'un changement d'environnement chimique comme par exemple la dispersion dans un solvant organique, ou en cas de variations de température, ou de pH.

Or, dans la préparation des microsphères, le principe actif ne subira aucune altération de son activité puisqu'il sera solubilisé dans la phase aqueuse interne d'une émulsion double au pH optimal. On réduit ainsi les changements d'environnement physico-chimique et de ce fait les altérations structurelles de la molécule, ce qui permet de conserver l'activité du principe actif.

Le procédé de préparation des microsphères comporte ensuite une deuxième étape consistant à soumettre l'émulsion obtenue à un cisaillement laminaire. Le cisaillement laminaire est réalisé de préférence dans un dispositif de Couette. C'est la viscoélasticité de l'émulsion obtenue grâce à un rapport des viscosité optimal entre les phases en présence, la vitesse de rotation du rotor ainsi que la vitesse d'injection de l'émulsion dans l'entrefer qui vont définir la taille et l'uniformité de taille des microsphères obtenues.

Le procédé de préparation des microsphères comporte ensuite une troisième étape consistant à extraire le solvant organique de la solution de polymère dispersée.

Cette étape peut être réalisée par tout procédé connu de l'homme du métier, par exemple évaporation sous l'effet de la chaleur ou sous vide.

Selon un mode de réalisation préféré, elle est réalisée par extraction du solvant organique dans l'eau. Plus concrètement, on ajoute à l'émulsion monodisperse préparée une grande quantité d'eau dans laquelle le solvant organique va diffuser. Ce mode de réalisation a notamment l'avantage de protéger le principe actif encapsulé de variations de température ou de pression.

A mesure que le solvant disparaît de la phase organique par diffusion dans l'eau, le polymère précipite et forme, suivant le type d'émulsion de départ, des microsphères à matrice polymérique retenant des gouttelettes de solution aqueuse (émulsion double), ou pleines (émulsion simple).

La précipitation a lieu de préférence sous faible agitation de façon à conserver l'homogénéité de l'émulsion et de la suspension.

Enfin, dans une dernière étape, les microsphères peuvent être recueillies par des moyens habituels, par exemple par filtration de la solution.

Le cas échéant, celles-ci peuvent ensuite être lyophilisées en présence de cryoproctecteur. Parmi les agents cryoprotecteurs, on peut citer notamment les polyols et les électrolytes. En particulier, conviennent par exemple la glycérine, le mannose, le glucose, le fructose, le xylose, le tréhalose, le mannitol, sorbitol, xylidine et autres polyols, et le polyéthylène glycol. A titre d'électrolyte, on peut citer le chlorure de sodium.

Ainsi, les microsphères préparées peuvent servir à véhiculer un ou plusieurs principes actifs, notamment hydrophiles et lipophiles, en permettant leur libération homogène et déterminée dans le temps.

L'invention sera décrite plus en détail dans les exemples et figures qui suivent, lesquelles montrent :
Fig. 1 : Vue schématique d'un dispositif Couette ;
Fig. 2 : Photographies de microscopie optique de microsphères préparées selon l'exemple 2 (a) avant extraction (objectif x100) ; (b) après séchage et redispersion (objectif x40) ; (c) leur distribution granulométrique après redispersion ;
Fig. 3 : Photographies de microscopie optique de microsphères de polymère selon l'exemple 3 (a) avant extraction (objectif x40); (b) après extraction (objectif x40); (c) leur distribution granulométrique après redispersion ;
Fig. 4 : Photographies de microscopie optique d'une émulsion inverse selon l'exemple 5 (a) avant cisaillement (objectif x10); (b) après cisaillement à 600 rpm sur l'appareil de Couette (objectif x10);
Fig. 5 : Distribution granulométrique de microsphères obtenues (a) selon l'exemple 7, par cisaillement aléatoire standard (agitateur à pales) ; (b) selon l'exemple 6, par cisaillement laminaire (appareil de Couette).

### EXEMPLES

### EXEMPLE 1

### Procédure générale de préparation de microsphères à partir d'une émulsion simple :

Ce procédé peut être utilisé pour préparer des microsphères de polymère biodégradables, utiles notamment pour la délivrance de principes actifs lipophiles.

Le principe actif à encapsuler est dispersé ou solubilisé dans une phase organique composée d'un PLGA dissous dans de l'acétate d'éthyle.

Cette phase organique est ensuite émulsionnée dans une phase aqueuse contenant de l'eau et un tensioactif hydrophile tel que le PVA, entre 0,1 et 10%, de préférence entre 1 et 4% et un agent de viscosité tel qu'un polyéthylène glycol ou un poloxamer entre 10 et 50%.

Le rapport des viscosités des deux phases est réglé afin d'optimiser l'efficacité du cisaillement. De préférence, le rapport entre la viscosité de la phase organique et celle de la phase aqueuse est compris entre 0,1 et 10, plus précisément entre 3 et 8.

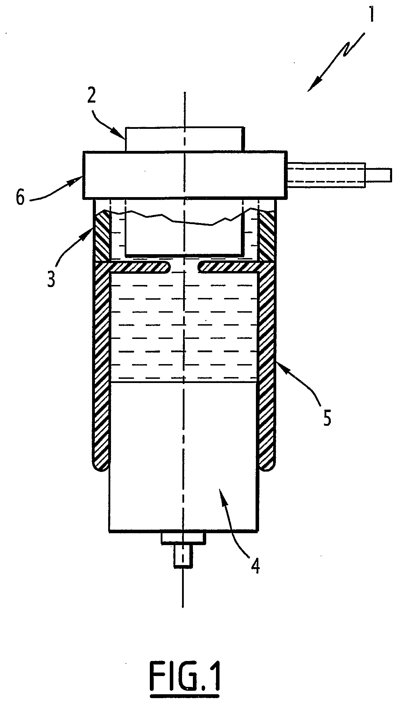

Ensuite, l'émulsion ainsi obtenue, dite « grossière » est soumise à un cisaillement laminaire. De préférence, cette étape est réalisée dans un dispositif de Couette, présenté figure 1. Le cisaillement contrôlé permet de rendre les gouttes de phase dispersée monodisperses ; il permet cependant aussi de contrôler leur taille. Le cisaillement contrôlé est réalisé en mettant l'émulsion en contact avec une surface solide en mouvement, le gradient de la vitesse caractérisant l'écoulement de l'émulsion étant constant dans une direction perpendiculaire à la surface solide en mouvement. Un tel cisaillement peut être réalisé par exemple dans une cellule constituée de deux cylindres concentriques en rotation l'un par rapport à l'autre, telle qu'une cellule « Couette ».

Un dispositif de Couette (1) est représenté à la figure 1. Il comporte un rotor (2), un stator (3) et un piston (4). On introduit l'émulsion dans l'espace défini entre le rotor et le stator ,désigné comme entrefer, par le biais d'une seringue d'injection (5). L'émulsion cisaillée entre le rotor et le stator est ensuite recueillie à la sortie dans une coupelle (6) de récupération dans un flacon hermétique. La vitesse de cisaillement, la largeur de l'entrefer et la vitesse d'injection sont des paramètres réglables qu'on peut faire varier en fonction de la taille des microsphères souhaitée.

Pour les détails de ce procédé, voir notamment les demandes WO 97/38787, FR 2767064 et WO0185319.

Une fois l'émulsion rendue ainsi monodisperse, on peut procéder à l'extraction du solvant pour précipiter les microsphères. L'extraction se fait par ajout d'un volume d'eau calculé en fonction de la solubilité de l'acétate d'éthyle dans l'eau et de la quantité d'émulsion obtenue. On utilise de préférence un volume d'eau égal à au moins deux fois le volume minimal nécessaire à la solubilisation de l'acétate d'éthyle.

Dans la mesure où l'acétate d'éthyle est plus soluble dans l'eau à froid, on procède à une seconde étape d'extraction à froid pour éliminer les résidus de solvant. Ainsi, après 30 minutes d'agitation, un second volume d'eau déminéralisée refroidi à 5°C est ajouté et l'ensemble est maintenu sous agitation pendant à nouveau 30 minutes. L'extraction du solvant ainsi réalisée est quasi totale.

A l'issue des 30 minutes, les microsphères sont ensuite séparées du milieu d'extraction par filtration sous pression sur filtre Nylon de porosité 0,45 µm. Le gâteau récupéré est rincé 3 fois par 1 L d'eau déminéralisée. Puis les microsphères sont laissées à sécher une nuit à température ambiante ou bien congelées et lyophilisées après addition d'un agent cryoprotecteur.

Une fois sèches, les microsphères sont redispersées dans une solution de tensioactif Montanox® 20 ou 80 (BASF) à 1 % (Montanox® 80 : polysorbate monooléate et Montanox® 20 : polysorbate monolaurate) par agitation et passage dans un bain à ultrasons. Les microsphères redispersées sont caractérisées par observation au microscope et leur distribution de taille est mesurée par granulométrie laser.

### EXEMPLE 2

### Préparation de microsphères de 2,5µm à partir d'une émulsion simple :

Dans un flacon, on prépare la phase aqueuse continue par solubilisation à 70°C de 0,9g de PVA dans 14,14g d'eau déminéralisée saturée en acétate d'éthyle (3%) sous agitation magnétique. Après refroidissement, 15g de PEG 400 y est incorporé. Cette phase aqueuse contient donc 3% de PVA, 50% de PEG 400 et est saturée en acétate d'éthyle.

La phase organique est préparée dans un flacon hermétique par dissolution sous agitation magnétique de 2,6g de PLGA 75/25 dans 17,39g d'acétate d'éthyle saturé en eau (3%). Cette phase organique contient donc 13% de PLGA solubilisé dans de l'acétate d'éthyle saturé en eau.

La totalité de cette phase organique est ensuite émulsionnée dans 20g de la phase aqueuse ci-dessus par agitation manuelle à la spatule. L'émulsion contient 50% en masse de phase organique dispersée.

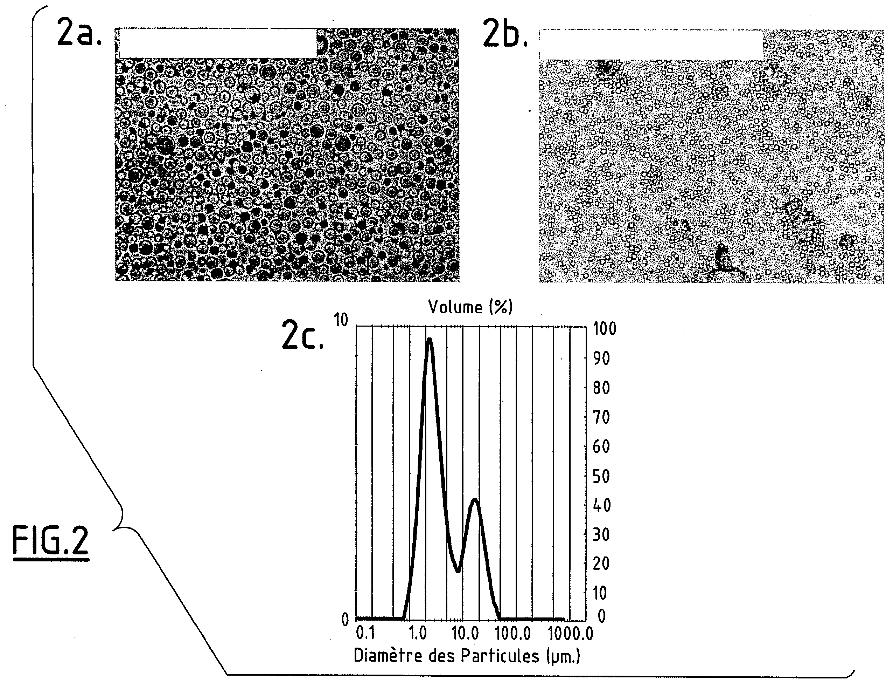

Le prémélange ainsi obtenu est ensuite placé dans l'appareil de Couette et cisaillé à une vitesse de 400 rpm dans un entrefer de 100 µm avec une vitesse de montée du piston de 0,7 qui correspond à un débit d'environ 7mL/min. Le diamètre du rotor est de 2 cm. On voit sur figure 2(a) la distribution de taille homogène de l'émulsion ainsi préparée.

Une fois l'émulsion rendue ainsi monodisperse, on procède à l'extraction du solvant, la filtration puis le séchage des microsphères, comme expliqué à l'exemple 1. La figure 2(b) montre l'aspect visuel régulier des microsphères obtenues, après redispersion comme décrit à l'exemple 1.

La distribution de taille des microsphères est mesurée par granulométrie laser (voir figure 2(c)), elle est centrée sur 2,5µm.

### EXEMPLE 3

### Préparation de microsphères de 6,5µm à partir d'une émulsion simple :

Dans un flacon, on prépare la phase aqueuse continue par solubilisation à 70°C de 1,2g de PVA dans 35,25g d'eau déminéralisée saturée en acétate d'éthyle (3%) sous agitation magnétique. Après refroidissement, 4,02g de PEG 2000 y est incorporé. Cette phase aqueuse contient donc 3% de PVA, 10% de PEG 2000 et est saturée en acétate d'éthyle.

La phase organique est préparée dans un flacon hermétique par dissolution sous agitation magnétique de 2,67g de PLGA 75/25 dans 17,89g d'acétate d'éthyle saturé en eau (3%). Cette phase organique contient donc 13% de PLGA solubilisé dans de l'acétate d'éthyle saturé en eau.

La totalité de cette phase organique est ensuite émulsionnée dans 20g de la phase aqueuse ci-dessus par agitation manuelle à la spatule. L'émulsion contient 50% en masse de phase organique dispersée.

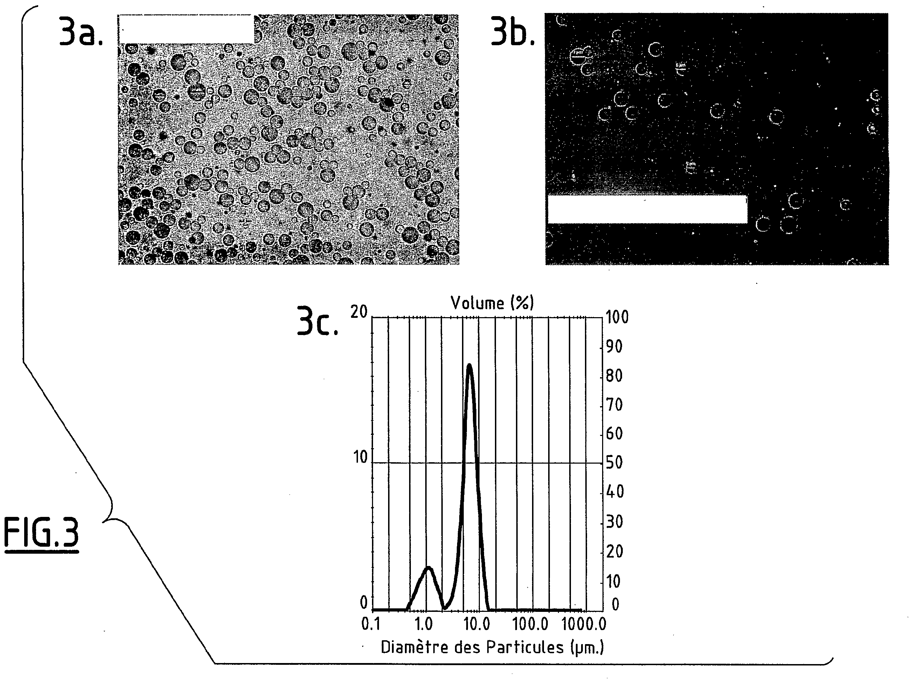

Le prémélange ainsi obtenu est ensuite placé dans l'appareil de Couette et cisaillé à une vitesse de 300 rpm dans un entrefer de 100 µm avec une vitesse de montée du piston de 0,7 qui correspond à un débit d'environ 7mL/min. Le diamètre du rotor est de 2 cm. On voit sur figure 3(a) la distribution de taille homogène de l'émulsion ainsi préparée.

Une fois l'émulsion rendue ainsi monodisperse, on procède à l'extraction du solvant, la filtration puis le séchage des microsphères, comme expliqué à l'exemple 1. La figure 3(b) montre l'aspect régulier des microsphères après extraction du solvant comme décrit à l'exemple 1.

La distribution de taille des microsphères est mesurée par granulométrie laser (voir figure 3(c)), elle est centrée sur 6,5µm.

### EXEMPLE 4 (pas selon l'invention)

### Procédure générale de préparation de microsphères à partir d'une émulsion double :

Ce procédé est employé pour la préparation de microsphères polymériques utiles notamment pour la délivrance de principes actifs hydrophiles ou une combinaison d'un principe actif hydrophile avec un principe actif lipophile

On prépare tout d'abord une émulsion inverse (E/H), en dispersant une phase aqueuse dite « interne » dans une phase organique comprenant une solution de polymère (PLGA 75/25, par exemple).

Le rapport des viscosités des deux phases, pour l'émulsion inverse, est réglé afin d'optimiser l'efficacité du cisaillement. De préférence, le rapport entre la viscosité de la phase aqueuse interne et celle de la phase organique est compris entre 0,1 et 10, plus précisément entre 0,1 et 0,3.

La phase aqueuse interne contient une protéine, notamment la SAH entre 0,01 et 10%, de préférence entre 0,1 et 2%, un co-tensioactif, notamment le Solutol® HS15 entre 0,01 et 10%, de préférence entre 0,05 et 1% et un sel, notamment le chlorure de sodium entre 0,1 et 20%, préférentiellement 0,6%.

La phase organique est préparée dans un flacon hermétique par dissolution sous agitation magnétique de PLGA 75/25 entre 5 et 30%, préfrentiellement à 20% dans une solution d'acétate d'éthyle saturé en eau (3%).

Généralement, le principe actif hydrophile à encapsuler est contenu dans la phase aqueuse interne et le principe actif lipophile dans la phase organique.

L'émulsion inverse « grossière » est alors soumise à un cisaillement comme décrit à l'exemple 1 afin d'obtenir une phase dispersée de taille et de répartition contrôlée. L'étape de cisaillement contrôlé peut être réalisée à l'aide d'un dispositif de Couette ou dans un dispositif turbulent de type Ultra-Turrax.

Dans un flacon, une solution aqueuse de PVA entre 0,01 et 10%, de préférence entre 1 et 4% est portée à 70°C sous agitation magnétique. Après refroidissement, on ajoute à la solution (phase aqueuse externe) le Lutrol® F68 entre 0,1 et 40%, de préférence entre 1 et 10% et du NaCl à une concentration identique à celle de la phase aqueuse interne : 0.6%.

Ensuite, cette phase aqueuse dite « externe » est saturée en solvant organique, préférentiellement l'acétate d'éthyle, ce qui représente pour ce solvant particulier une concentration d'environ 3% en poids par rapport au poids de la phase aqueuse.

Ensuite, on incorpore l'émulsion inverse dans la phase aqueuse externe décrite ci-dessus. Cette étape peut être réalisée manuellement à l'aide d'une spatule.

Le rapport des viscosités des deux phases, dans le cas de l'émulsion double, est réglé afin d'optimiser l'efficacité du cisaillement. De préférence, le rapport entre la viscosité de la phase organique et celle de la phase aqueuse externe est compris entre 0,1 et 10, plus précisément entre 3 et 8.

L'émulsion ainsi obtenue est aussi appelée « prémélange » ou émulsion « grossière » dans la mesure où la phase dispersée est constituée de gouttelettes de taille importante et très variable.

L'émulsion « grossière » est alors soumise à un cisaillement comme décrit à l'exemple 1 afin d'obtenir une phase dispersée de taille et de répartition contrôlée. L'étape de cisaillement contrôlé peut être réalisée à l'aide d'un dispositif de Couette.

Une fois l'émulsion rendue ainsi monodisperse, on procède à l'extraction du solvant pour précipiter les microsphères. L'extraction se fait par ajout d'un volume d'eau calculé en fonction de la solubilité de l'acétate d'éthyle dans l'eau et de la quantité d'émulsion obtenue. On utilise de préférence un volume d'eau égal à au moins deux fois le volume minimal nécessaire à la solubilisation de l'acétate d'éthyle.

Dans la mesure où l'acétate d'éthyle est plus soluble dans l'eau à froid, on procède à une seconde étape d'extraction à froid pour éliminer les résidus de solvant. Ainsi, après 30 minutes d'agitation, un second volume d'eau déminéralisée refroidi à 5°C est ajouté et l'ensemble est maintenu sous agitation pendant à nouveau 30 minutes. L'extraction du solvant ainsi réalisée est quasi totale.

Les microsphères monodisperses contenant le ou les principes actifs sont filtrées et lyophilisées comme décrit à l'exemple 1.

Une fois sèches, les microsphères sont redispersées dans une solution de tensioactif Montanox® 20 ou 80 (BASF) à 1% (Montanox® 80 : polysorbate monooléate et Montanox® 20 : polysorbate monolaurate) par agitation et passage dans un bain à ultrasons. Les microsphères redispersées sont caractérisées par observation au microscope et leur distribution de taille est mesurée par granulométrie laser.

### EXEMPLE 5 (pas selon l'invention)

### Préparation d'une émulsion inverse de 1µm :

Dans un flacon, on prépare la phase aqueuse interne sous agitation magnétique. Elle est composée de 0,04g de SAH, de 0,0036g de Solutol® HS15 et de 0,022g de NaCL solubilisés dans 4g de tampon citrate pH5 saturé en acétate d'éthyle (3%). Cette phase aqueuse interne contient donc 1% de SAH, 0,1% de Solutol® HS15 et est saturée en acétate d'éthyle.

La phase organique est préparée dans un flacon hermétique par dissolution sous agitation magnétique de 3,2 g de PLGA 75/25 dans 12,82 g d'acétate d'éthyle saturé en eau (3%). Cette phase organique contient donc 20% de PLGA solubilisé dans de l'acétate d'éthyle saturé en eau.

On disperse manuellement à la spatule la phase aqueuse interne dans la solution d'acétate d'éthyle pour obtenir une émulsion inverse grossière.

Cette émulsion contient 20 % en poids de phase aqueuse interne par rapport à son poids total. La stabilité de l'émulsion grossière réalisée est vérifiée avant cisaillement par l'absence de déphasage et de coalescence.

Le prémélange ainsi obtenu est ensuite placé dans l'appareil de Couette et cisaillé à une vitesse de 400 rpm dans un entrefer de 100 µm avec une vitesse de montée du piston de 0,7 qui correspond à un débit d'environ 7mL/min. Le diamètre du rotor est de 2 cm. L'émulsion inverse est stable après cisaillement à l'appareil de Couette.

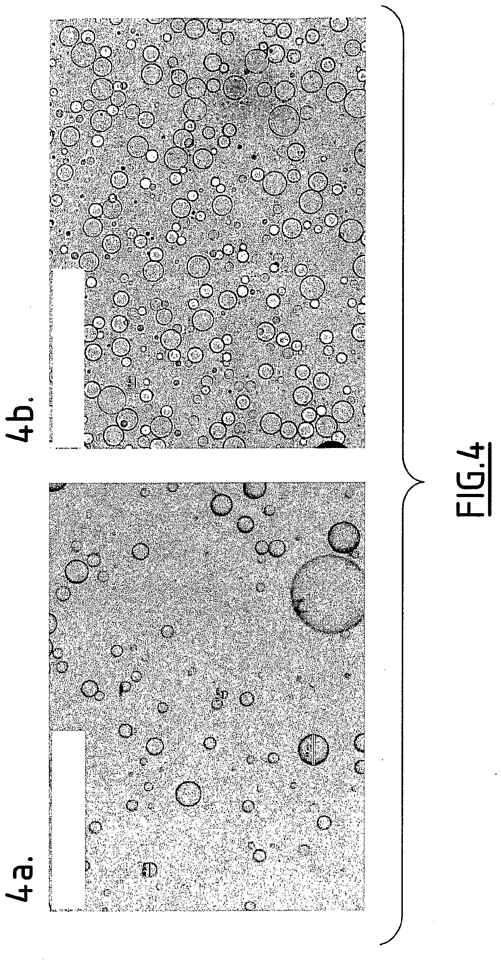

L'aspect visuel au microscope du prémélange et de l'émulsion après cisaillement sur l'appareil de Couette est présenté sur la figure 4(a) et (b).

L'émulsion double calibrée est ensuite préparée comme suit.

### EXEMPLE 6 (pas selon l'invention)

### Préparation de microsphères monodisperses de 28µm à partir d'une émulsion double :

On prépare d'abord une émulsion inverse comme à l'exemple 5 avec :
- 20% de PLGA dans l'acétate d'éthyle ;
- 1 % de SAH dans la phase aqueuse interne,
- 0,1% de Solutol^{®} HS15,
- 0,6% de NaCl dans la phase aqueuse interne.

L'émulsion inverse grossière obtenue est ensuite cisaillée à l'Ultra-turrax (puissance 24000) pendant 3 minutes ou bien dans le dispositif de Couette à 400 rpm.

On incorpore alors à la spatule 20g d'émulsion inverse obtenue dans une même quantité de phase aqueuse externe composée de 3g de Lutrol^{®} F68, 0,9g de PVA et 0,18% de NaCl. Cette phase aqueuse externe contient donc 10% de Lutrol^{®} F68, 3% de PVA et 0,6% de NaCl et est saturée en acétate d'éthyle. Cette émulsion double contient 50 % en poids d'émulsion inverse par rapport à son poids total.

Le prémélange ainsi obtenu est ensuite placé dans l'appareil de Couette et cisaillé à une vitesse de 100 rpm dans un entrefer de 100 µm avec une vitesse de montée du piston de 0,7 qui correspond à un débit d'environ 7mL/min. Le diamètre du rotor est de 2 cm.

L'émulsion double recueillie en sortie de l'appareil est diluée sous agitation dans 250 mL d'eau salée (0,6% NaCl) à température ambiante.

Après 10 minutes, on ajoute un second volume de 250 mL d'eau salée à 5°C, et on poursuit l'agitation pendant 10 minutes. On observe la transformation des globules doubles en microsphères solides. Les microsphères sont ensuite séparées du milieu d'extraction par filtration sous pression sur filtre Nylon de porosité 0,45 µm. Le gâteau récupéré est rincé 3 fois par 1 L d'eau déminéralisée.

Pour la lyophilisation, les microsphères filtrées sont dispersées dans une solution de tréhalose. Le pourcentage de tréhalose ajouté correspond à 5% des microsphères à lyophiliser. L'échantillon est d'abord congelé dans l'azote liquide, puis stocké au congélateur à -24°C. La lyophilisation se fait selon la rampe suivante avec un vide fixé à 0,12 mbar:
➢ Dessication primaire par passage de -44°C à -10°C en 4 heures et isotherme à -10°C pendant 15h30.
➢ Dessication secondaire par passage de -10°C à +10°C en 30 minutes et retour à température ambiante en 30minutes.

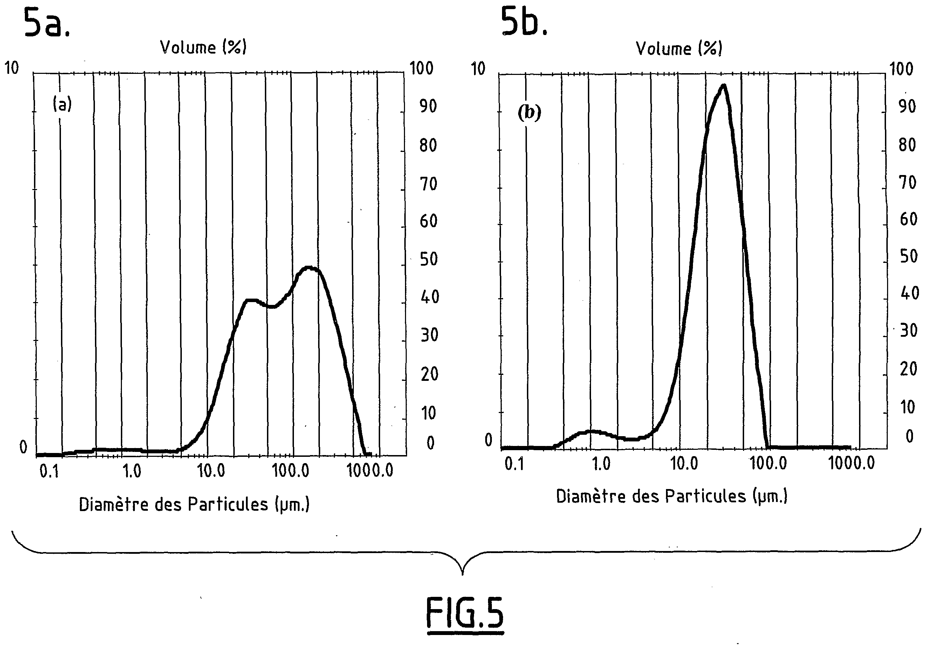

Une fois sèches, les microsphères sont redispersées dans une solution de tensioactif Montanox® 20 ou 80 (BASF) à 1 % (Montanox® 80 : polysorbate monooléate et Montanox® 20 : polysorbate monolaurate) par agitation et passage dans un bain à ultrasons. Les microsphères redispersées sont caractérisées par observation au microscope et leur distribution de taille est mesurée par granulométrie laser. La distribution de taille des microsphères est centrée sur 28µm (figure 5b).

### EXEMPLE 7 (pas selon l'invention)

### Préparation de microsphères par cisaillement turbulent :

On a préparé un lot de microsphères selon l'exemple 6, en utilisant un cisaillement en régime turbulent (Ultra-turrax puis agitation à pâles) en remplacement du cisaillement laminaire engendré par l'appareil de Couette.

La distribution de taille de ces microsphères a été évaluée par un granulomètre au laser (figure 5a) et comparée à celle établie pour les microsphères préparées selon l'exemple 6 (figure 5b).

On constate aisément que le cisaillement laminaire tel que dispensé par le dispositif de Couette permet l'obtention d'une distribution de taille plus étroite et de ce fait un caractère monodisperse plus prononcé. De ce fait, on contrôle mieux la cinétique de libération des principes actifs contenus dans les microsphères.

## Revendications

1. Procédé de préparation de microsphères biodégradables monodisperses comprenant les étapes de :
a) préparation d'une émulsion simple directe comportant au moins une phase polymérique, laquelle comprend un principe actif pharmaceutique, et au moins une phase aqueuse, la viscosité de la phase organique et de la phase aqueuse présentant un ratio de 0,1 à 10 ;
b) soumission de l'émulsion obtenue à un cisaillement laminaire contrôlé en mettant l'émulsion en contact avec une surface solide en mouvement, le gradient de la vitesse caractérisant l'écoulement de l'émulsion étant constant dans une direction perpendiculaire à la surface solide en mouvement ;
c) élimination du solvant de la phase polymérique ; et
d) isolement des microsphères ainsi obtenues.

2. Procédé selon la revendication 1, dans lequel les microsphères sont constituées d'une matrice d'un polymère biodégradable.

3. Procédé selon la revendication 2, dans lequel le polymère biodégradable est choisi parmi les poly(α-hydroxy)acides, les polyesters aliphatiques des poly(α-hydroxy-acides), des poly(ε-caprolactones)-PCL, des polydioxanones - PDO, les polyorthoesters, les polyanhydrides, les polycyano-acrylates, les polyuréthannes, les polypeptides ou poly(amino-acides), les polysaccharides modifiés, la cellulose, les polycarbonates, les polydiméthylsiloxanes et les poly(vinyl-acétates) et leurs dérivés et copolymères.

4. Procédé selon l'une des revendications 2 à 3, dans lequel le polymère biodégradable est choisi parmi les polyacides lactiques (PLA), les copolymères d'acide polylactique / acide polyglycolique (PLGA).

5. Procédé selon l'une des revendications 1 à 4, dans lequel le polymère présente un poids moléculaire compris entre 50 et 500 kDaltons (entre 8.302650000007.10⁻²⁰ et 8.302650000007.10⁻¹⁹ g).

6. Procédé selon l'une des revendications 1 à 5, dans lequel le solvant organique de la phase organique de l'émulsion est l'acétate d'éthyle.

7. Procédé selon l'une des revendications 1 à 6, dans lequel le principe actif pharmaceutique est liposoluble.

8. Procédé selon l'une des revendications 1 à 7, dans lequel le principe actif pharmaceutique est hydrosoluble.

9. Procédé selon l'une des revendications 1 à 8, dans lequel le principe actif pharmaceutique est un peptide ou une protéine.

10. Procédé selon l'une des revendications 1 à 9, dans lequel l'émulsion préparée à l'étape (a) comprend un principe actif pharmaceutique hydrophile en combinaison avec un principe actif pharmaceutique lipophile.

11. Procédé selon l'une des revendications 1 à 10, dans lequel la phase organique de l'émulsion représente 10 à 60 % en poids par rapport au poids total de l'émulsion.

12. Procédé selon l'une des revendications 1 à 11, dans lequel la phase organique de l'émulsion comprend entre 1 et 50 %, préférentiellement entre 5 et 30 % en poids de polymère.

13. Procédé selon l'une des revendications 1 à 12, dans lequel la phase organique de l'émulsion comprend entre 1 et 50 %, préférentiellement entre 5 et 30 % en poids de principe actif pharmaceutique.

14. Procédé selon l'une des revendications 1 à 13, dans lequel la phase aqueuse de l'émulsion contient au moins un agent stabilisant et/ou au moins un agent de viscosité.

15. Procédé selon l'une des revendications 1 à 14, dans lequel la phase aqueuse de l'émulsion contient au moins un agent stabilisant et/ou au moins un agent d'osmolarité et/ou au moins un agent tensioactif et/ou au moins un agent tampon.

16. Procédé selon l'une des revendications 1 à 15, dans lequel l'étape de calibration par cisaillement laminaire est réalisée dans un dispositif de Couette.

17. Procédé selon l'une des revendications 1 à 16, dans lequel l'étape de l'élimination du solvant de la phase polymérique est réalisée par extraction dans l'eau.

## Patentansprüche

1. Verfahren zum Herstellen von monodispersen biologisch abbaubaren Mikrosphären, umfassend die Schritte:
a) Herstellen einer direkten einfachen Emulsion, die mindestens eine Polymerphase, die einen pharmazeutischen Wirkstoff enthält, und mindestens eine wässrige Phase aufweist, wobei die Viskosität der organischen Phase und der wässrigen Phase ein Verhältnis von 0,1 bis 10 aufweist;
b) Unterwerfen der erhaltenen Emulsion einer gesteuerten laminaren Scherung, indem die Emulsion mit einer sich bewegenden festen Fläche in Kontakt gebracht wird, wobei der Gradient der die Strömung der Emulsion charakterisierenden Geschwindigkeit in einer Richtung senkrecht zur festen Fläche in Bewegung konstant ist;
c) Entfernen des Lösungsmittels der Polymerphase; und
d) Isolieren der so erhaltenen Mikrosphären.

2. Verfahren nach Anspruch 1, bei dem die Mikrosphären aus einer Matrix eines biologisch abbaubaren Polymers gebildet sind.

3. Verfahren nach Anspruch 2, bei dem das biologisch abbaubare Polymer ausgewählt ist aus Poly(α-Hydroxysäuren), aliphatischen Polyestern der Poly(α-Hydroxysäuren), Poly(ε-Caprolaktone)-PCL, Polydioxanone-PDO, Polyorthoestern, Polyanhydriden, Polycyanoacrylaten, Polyurethanen, Polypeptiden oder Poly(Aminosäuren), modifizierten Polysacchariden, Zellulose, Polycarbonaten, Polydimethylsiloxanen und Poly(Vinylacetaten) und ihren Derivaten und Copolymeren.

4. Verfahren nach einem der Ansprüche 2 bis 3, bei dem das biologisch abbaubare Polymer ausgewählt ist aus Polymilchsäuren (PLA), Copolymeren der Polymilchsäure/Polyglycolsäure (PLGA).

5. Verfahren nach einem der Ansprüche 1 bis 4, bei dem das Polymer ein Molekulargewicht zwischen 50 und 500 kDalton (zwischen 8,02650000007 10⁻²⁰ und 8,302650000007 10⁻¹⁹ g) aufweist.

6. Verfahren nach einem der Ansprüche 1 bis 5, bei dem das organische Lösungsmittel der organischen Phase der Emulsion Ethylacetat ist.

7. Verfahren nach einem der Ansprüche 1 bis 6, bei dem der pharmazeutische Wirkstoff fettlöslich ist.

8. Verfahren nach einem der Ansprüche 1 bis 7, bei dem der pharmazeutische Wirkstoff wasserlöslich ist.

9. Verfahren nach einem der Ansprüche 1 bis 8, bei dem der pharmazeutische Wirkstoff ein Peptid oder ein Protein ist.

10. Verfahren nach einem der Ansprüche 1 bis 9, bei dem die in Schritt (a) hergestellte Emulsion einen hydrophilen pharmazeutischen Wirkstoff in Kombination mit einem lipophilen pharmazeutischen Wirkstoff enthält.

11. Verfahren nach einem der Ansprüche 1 bis 10, bei dem die organische Phase der Emulsion 10 bis 60 Gew.-% in Bezug auf das Gesamtgewicht der Emulsion darstellt.

12. Verfahren nach einem der Ansprüche 1 bis 11, bei dem die organische Phase der Emulsion zwischen 1 bis 50 Gew.-%, vorzugsweise zwischen 5 und 30 Gew.-% Polymer enthält.

13. Verfahren nach einem der Ansprüche 1 bis 12, bei dem die organische Phase der Emulsion zwischen 1 bis 50 Gew.-%, vorzugsweise zwischen 5 und 30 Gew.-% an pharmazeutischem Wirkstoff enthält.

14. Verfahren nach einem der Ansprüche 1 bis 13, bei dem die wässrige Phase der Emulsion mindestens ein Stabilisierungsmittel und/oder mindestens ein Viskositätsmittel enthält.

15. Verfahren nach einem der Ansprüche 1 bis 14, bei dem die wässrige Phase der Emulsion mindestens ein Stabilisierungsmittel und/oder mindestens ein Osmolaritätsmittel und/oder mindestens ein Tensid und/oder mindestens ein Puffermittel enthält.

16. Verfahren nach einem der Ansprüche 1 bis 15, bei dem der Schritt der Kalibrierung durch laminare Scherung in einer Couette-Vorrichtung realisiert wird.

17. Verfahren nach einem der Ansprüche 1 bis 16, bei dem der Schritt der Entfernung des Lösungsmittels der Polymerphase durch Extraktion im Wasser realisiert wird.

## Claims

1. A method for preparing monodisperse biodegradable microspheres comprising the steps of:
a) preparing an emulsion comprising at least one polymer phase, which comprises a active pharmaceutical ingredient, and at least one aqueous phase, the viscosity of the organic phase and the aqueous phase having a ratio of from 0.1 to 10;
b) subjecting the emulsion obtained to controlled laminar shearing by placing the emulsion in contact with a moving solid surface, the speed gradient characterizing the flow of the emulsion being constant in a direction perpendicular to the moving solid surface;
c) removing the solvent from the polymer phase; and
d) isolating the microspheres so obtained.

2. The method of claim 1, wherein the microspheres are constituted by a biodegradable polymer.

3. The method of claim 2, wherein the biodegradable polymer is selected from poly(α-hydroxy) acids, the aliphatic polyesters of poly(α-hydroxy acids), of poly(ε-caprolactones)-PCL, of polydioxanones - PDO, polyorthoesters, polyanhydrides, polycyanoacrylates, polyurethanes, polypeptides or poly(amino acids), modified polysaccharides, cellulose, polycarbonates, polydimethylsiloxanes and poly(vinyl acetates) and their derivatives and copolymers.

4. The method of claim 2 or 3, wherein the biodegradable polymer is selected from polylactic acids (PLA), and the copolymers of polylactic acid / polyglycolic acid (PLGA).

5. The method of one of claims 1 to 4, wherein the polymer has a molecular weight of from 50 to 500 kDaltons (between 8.302650000007.10⁻²⁰ and 8.302650000007.10⁻¹⁹ g).

6. The method of one of claims 1 to 5, wherein the organic solvent of the organic phase of the emulsion is ethyl acetate.

7. The method of one of claims 1 to 6, wherein the active ingredient is lipid-soluble.

8. The method of one of claims 1 to 7, wherein the active ingredient is water-soluble.

9. The method of one of claims 1 to 8, wherein the active ingredient is a peptide or a protein.

10. The method of one of claims 1 to 9, wherein the emulsion prepared in step (a) comprises a hydrophilic active ingredient in combination with a lipophilic active ingredient.

11. The method of one of claims 1 to 10, wherein the organic phase of the emulsion represents from 10 to 60% by weight relative to the total weight of the emulsion.

12. The method of one of claims 1 to 11, wherein the organic phase of the emulsion comprises from 1 to 50%, preferably from 5 to 30% by weight of polymer.

13. The method of one of claims 1 to 12, wherein the organic phase of the emulsion comprises from 1 to 50%, preferably from 5 to 30% by weight of active ingredient.

14. The method of one of claims 1 to 13, wherein the aqueous phase of the emulsion contains at least one stabilizing agent and/or at least one viscosity agent.

15. The method of one of claims 1 to 14, wherein the aqueous phase of the emulsion contains at least one stabilizing agent and/or at least one osmolarity agent and/or at least one surfactant and/or at least one buffer agent.

16. The method of one of claims 1 to 15, wherein the step of calibration by laminar shearing is carried out in a Couette device.

17. The method of one of claims 1 to 16, wherein the step of removing the solvent from the polymer phase is carried out by extraction in water.
